(19) Europäisches Patentamt
European Patent Office
Office européen des brevets

(11) **EP 4 089 401 B1**

(12) **EUROPÄISCHE PATENTSCHRIFT**

(45) Veröffentlichungstag und Bekanntmachung des Hinweises auf die Patenterteilung:
**06.11.2024 Patentblatt 2024/45**

(21) Anmeldenummer: **21173079.1**

(22) Anmeldetag: **10.05.2021**

(51) Internationale Patentklassifikation (IPC):
**G01N 21/65** *(2006.01)* **G01J 3/44** *(2006.01)*
**G01N 21/76** *(2006.01)* **G01N 33/00** *(2006.01)*

(52) Gemeinsame Patentklassifikation (CPC):
**G01N 21/65; G01N 21/766;** G01N 2021/651;
G01N 2021/655

(54) **MESSEINRICHTUNG UND VERFAHREN ZUR MESSUNG VON MINDESTENS ZWEI VERSCHIEDENEN KOMPONENTEN EINES FLUIDS MITTELS RAMANSTREUUNG UND CHEMILUMINESZENZ**

MEASURING DEVICE AND METHOD FOR MEASURING AT LEAST TWO DIFFERENT COMPONENTS OF A FLUID USING RAMAN SCATTERING AND CHEMILUMINESCENCE

DISPOSITIF DE MESURE ET PROCÉDÉ DE MESURE D'AU MOINS DEUX COMPOSANTS DIFFÉRENTS D'UN FLUIDE UTILISANT LA DIFFUSION RAMAN ET LA CHIMILUMINESCENCE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**16.11.2022 Patentblatt 2022/46**

(73) Patentinhaber: **Siemens Aktiengesellschaft 80333 München (DE)**

(72) Erfinder:
• **Heffels, Camiel**
  **76297 Stutensee-Büchig (DE)**

• **Harr, Konstantin**
  **76133 Karlsruhe (DE)**

(74) Vertreter: **Siemens Patent Attorneys Postfach 22 16 34 80506 München (DE)**

(56) Entgegenhaltungen:
**WO-A1-99/08115** **CN-A- 110 987 911**
**US-A- 4 573 796** **US-A1- 2010 118 301**

**Beschreibung**

Die vorliegende Offenbarung betrifft Verfahren und Messeinrichtungen zur Messung von mindestens zwei verschiedenen Komponenten eines Fluids. Insbesondere betrifft die vorliegende Offenbarung automatische Messeinrichtungen und Verfahren zur Messung von Gasen, insbesondere in Abgasen stationärer und mobiler Quellen.

Mindestanforderungen und Prüfprozeduren für automatische Messeinrichtungen zur Überwachung von Emissionen aus stationären Quellen sind beispielsweise in der Norm DIN EN 15267-3 beschrieben. Dafür ist die Messung der Stickoxide ($NO_x$) erforderlich. Es geht dabei um eine Summe der Gaskomponenten NO und $NO_2$. Außerdem spielt die Messung von Stickoxiden weiterhin eine große Rolle trotz der Tatsache, dass die Dekarbonisierung der Weltwirtschaft fortschreitet. Beispielsweise ist bei der Verbrennung von Wasserstoff in Gasturbinen (künftige Unterstützung der Stromproduktion aus regenerativen Quellen und bei Wasserstoffflugzeugen und Seeschiffen) weiterhin mit $NO_x$ Emissionen zu rechnen.

Aus dem Stand der Technik sind Messverfahren für die Messung von NO oder für $NO_2$ für zertifizierte Messsysteme bekannt. Nachteilhaft bei diesen Verfahren und auch anderen herkömmlichen Verfahren und Einrichtungen (siehe z.B. WO 9908115 A1 oder US 4573796 A) ist allerdings, dass stets nur eine Komponente des Gases gemessen werden kann.

Es besteht somit ein großer Bedarf an Verfahren und Messvorrichtungen, die eine Messung von zumindest zwei unterschiedlichen Gaskomponenten ermöglichen.

Die Aufgabe der vorliegenden Erfindung kann somit darin gesehen werden, den oben genannten Bedarf zu erfüllen.

Die oben genannte Aufgabe wird mit einem Verfahren zur Messung von mindestens zwei verschiedenen Komponenten eines Fluids erfindungsgemäß dadurch gelöst, dass das Fluid einer ersten und einer zweiten Messzelle, vorzugsweise gleichzeitig, zugeführt wird, wobei in der ersten Messzelle zumindest eine erste Komponente des Fluids mittels einer ersten Anregung angeregt wird und dadurch eine erste Lichtemission ausgelöst wird, wobei in der zweiten Messzelle zumindest eine zweite Komponente des Fluids mittels einer zweiten, von der ersten Anregung unterschiedlichen Anregung, angeregt wird und dadurch eine zweite Lichtemission ausgelöst wird, wobei die erste Lichtemission und die zweite Lichtemission mittels einer Optikeinrichtung aufgefangen werden und in Richtung einer Detektoreinrichtung geleitet werden, wobei die Detektoreinrichtung die erste Lichtemission und die zweite Lichtemission misst, wobei die erste Anregung eine Laseranregung ist, die erste Lichtemission eine Raman-Strahlung ist, und die zweite Anregung durch Dosieren eines zu einer Chemilumineszenz mit der zweiten Komponente des Fluids führenden Reaktants erfolgt, wobei die Optikeinrichtung zumindest eine erste Stufe und zumindest eine zweite, von der ersten Stufe unterschiedliche Stufe aufweist, wobei die zumindest eine erste Stufe zu einer räumlichen Filterung der Raman-Strahlung vorgesehen ist und die zumindest eine zweite Stufe zur Abbildung der räumlich gefilterten Raman-Strahlung auf die Detektoreinrichtung vorgesehen ist.

Verwendung von zwei verschiedenen Anregungen, beispielsweise zwei verschiedenen Anregungsarten, in zwei verschiedenen Messzellen ermöglicht gleichzeitige unabhängige Messungen (von Konzentrationen) von zwei verschiedenen Komponenten, z.B. von Stickstoffmonoxid und Stickstoffdioxid.

Bei einer Ausführungsform kann es vorgesehen sein, dass die zweite Messzelle von der ersten Messzelle baulich getrennt ausgebildet ist.

Bei einer Ausführungsform kann es vorgesehen sein, dass die Detektoreinrichtung zwei voneinander baulich getrennte Detektorvorrichtungen, beispielsweise Detektoren, insbesondere Photomultiplier umfasst.

Bei einer Ausführungsform kann es vorgesehen sein, dass die Optikeinrichtung zwei voneinander baulich getrennte Optikvorrichtungen umfasst.

Bei einer Ausführungsform kann es vorgesehen sein, dass die Detektorvorrichtungen jeweils den Optikvorrichtungen zugeordnet sind.

Bei einer Ausführungsform kann es vorgesehen sein, dass die erste Komponente Stickstoffdioxid ist.

Bei einer Ausführungsform kann es vorgesehen sein, dass für die Laseranregung eine Laserlichtquelle mit einer zum elektronischen Übergang in den Stickstoffdioxid-Molekülen passenden Wellenlänge verwendet wird.

Bei einer Ausführungsform kann es vorgesehen sein, dass mittels der Laserlichtquelle abstrahlbares Laserlicht eine Wellenlänge von etwa 405 nm $\pm$ 10 nm aufweist.

Bei einer Ausführungsform kann es vorgesehen sein, dass der Reaktant Ozon umfasst, vorzugsweise ist und/oder die zweite Komponente Stickstoffmonoxid ist.

Bei einer Ausführungsform kann es vorgesehen sein, dass die erste Lichtemission und die zweite Lichtemission gleichzeitig gemessen werden.

Bei einer Ausführungsform kann es vorgesehen sein, dass für die Messung der ersten Lichtemission ein erster Bandpassfilter (z.B. mit Zentralwellenlänge von etwa 477 nm und mit Halbwertsbreite von etwa 10 nm) verwendet wird und/oder für die Messung der zweiten Lichtemission ein zweiter Bandpassfilter (z.B. mit Zentralwellenlänge von etwa 650 nm und mit Halbwertsbreite von etwa 100 nm) verwendet wird.

Die Bandpassfilter können beispielsweise in der Optikeinrichtung wechselbar angeordnet sein.

Bei einer Ausführungsform kann es vorgesehen sein, dass der erste und der zweite Bandpassfilter abwechselnd oder gleichzeitig verwendet werden.

Bei einer Ausführungsform kann es vorgesehen sein, dass die erste Lichtemission mit einem ersten Teil der Detektoreinrichtung und/oder die zweite Lichtemission mit einem zweiten Teil der Detektoreinrichtung gemessen wird.

Bei einer Ausführungsform kann es vorgesehen sein, dass die erste und die zweite Komponente des Fluids gleichzeitig (parallel) angeregt und/oder gemessen werden.

Bei einer Ausführungsform kann es vorgesehen sein, dass die erste Lichtemission eine Lichtemission der ersten Komponente und eine Lichtemission einer weiteren, von der ersten Komponente verschiedenen Komponente umfasst.

Bei einer Ausführungsform kann es vorgesehen sein, dass die Lichtemission der ersten Komponente und die Lichtemission der weiteren Komponente abwechselnd oder gleichzeitig gemessen werden.

Bei einer Ausführungsform kann es vorgesehen sein, dass für die Messung der Lichtemission der ersten Komponente und der Lichtemission der weiteren Komponente verschiedene Bandpassfilter verwendet, beispielsweise in die Optikeinrichtung eingesetzt werden.

Die oben genannte Aufgabe wird außerdem mit einer Messeinrichtung zur Messung von mindestens zwei verschiedenen Komponenten eines Fluids gelöst, wobei die Messeinrichtung eine erste Messzelle und eine zweite Messzelle, eine Anregungsvorrichtung, eine Optikeinrichtung, wobei die Optikeinrichtung zumindest eine erste Stufe und zumindest eine zweite, von der ersten Stufe unterschiedliche Stufe aufweist, und eine Detektoreinrichtung umfasst, wobei die erste Messzelle derart ausgebildet ist, dass das Fluid der ersten Messzelle zuführbar ist, wobei die Anregungsvorrichtung der ersten Messzelle zugeordnet ist und dazu eingerichtet ist, eine erste Anregung zum Anregen zumindest einer ersten Komponente des Fluids zu erzeugen, wenn das Fluid der ersten Messzelle zugeführt ist, wobei die erste Stufe dazu eingerichtet ist, eine erste durch die erste Anregung auslösbare Lichtemission aufzufangen, räumlich zu filtern und in Richtung der Detektoreinrichtung zu leiten, wobei die erste Anregung eine Laseranregung ist und die erste Lichtemission eine Raman-Strahlung ist, wobei die Detektoreinrichtung der Optikeinrichtung zugeordnet ist und dazu eingerichtet ist, die Raman-Strahlung zu messen.

Erfindungsgemäß ist die zweite Messzelle derart ausgebildet ist, dass das Fluid der zweiten Messzelle zuführbar ist, wobei, wenn das Fluid der zweiten Messzelle zugeführt ist, eine zweite Komponente des Fluids in der zweiten Messzelle durch eine zweite, von der ersten Anregung unterschiedlichen Anregung anregbar ist, wobei die zweite Anregung durch Dosieren eines zu einer Chemilumineszenz mit der zweiten Komponente des Fluids führenden Reaktants erfolgt, wobei die zweite Stufe dazu eingerichtet ist, die räumlich gefilterte Raman-Strahlung auf die Detektoreinrichtung abzubilden und die Chemilumineszenz aufzufangen und in Richtung der Detektoreinrichtung zu leiten, die Detektoreinrichtung dazu eingerichtet ist, die Chemilumineszenz zu messen.

Weiter erfindungsgemäß ist die zweite Stufe zwischen der ersten Stufe und der Detektoreinrichtung angeordnet. Ferner ist die zweite Messzelle an einem der ersten Stufe zugewandten Ende der zweiten Stufe innerhalb der zweiten Stufe ausgebildet.

Die Messeinrichtung kann kompakt genug ausgebildet sein. Beispielsweise ist die Messeinrichtung etwa 35 cm x 35 cm, so dass sie in einem Schuhkarton Platz findet. Zusammenfassend ist die Messeinrichtung derart ausgebildet, damit eine Messung von Gasen mobiler Quellen möglich ist. Darüber hinaus benötigt die Messeinrichtung nahezu keine Probenaufbereitung. Es versteht sich, dass das Fluid während der Messung die erste und die zweite Messzelle durchströmt.

Bei einer Ausführungsform kann es vorgesehen sein, dass die erste/zweite Lichtemission für die erste/zweite Komponente spezifisch bzw. charakteristisch ist.

Bei einer Ausführungsform kann es vorgesehen sein, dass die erste und die zweite Lichtemissionen sich voneinander unterscheiden, beispielsweise in ihrer (zentralen) Wellenlänge verschieden sind.

Bei einer Ausführungsform kann es vorgesehen sein, dass die Anregungsvorrichtung eine Laserlichtquelle ist und die erste Anregung eine Laseranregung ist.

Bei einer Ausführungsform kann es vorgesehen sein, dass die Laserlichtquelle dazu ausgebildet ist, um Laserlicht mit einer Wellenlänge von etwa 405 nm $\pm$ 10 nm abzustrahlen.

Bei einer Ausführungsform kann es vorgesehen sein, dass die erste Lichtemission eine Raman-Strahlung ist.

Bei einer Ausführungsform kann es vorgesehen sein, dass die zweite Messzelle nicht druckfest ist.

Erfindungsgemäß umfasst die Messeinrichtung eine der zweiten Messzelle zugeordnete Anregungsvorrichtung, die dazu eingerichtet ist, die zweite Anregung in der zweiten Messzelle zu erzeugen.

Erfindungsgemäß ist vorgesehen, dass die zweite Anregung durch Zufügen eines Reaktants erfolgt, der mit der zweiten Komponente chemisch reagieren und eine Chemolumineszenz auslösen kann.

Bei einer Ausführungsform kann es vorgesehen sein, dass die weitere Anregungsvorrichtung als eine Reaktantgenerator-Vorrichtung, z.B. als ein Ozongenerator, ausgebildet ist, die dazu eingerichtet ist, den Reaktant der zweiten Messzelle zuzuführen.

Erfindungsgemäß ist vorgesehen, dass die zweite Lichtemission eine Chemolumineszenz-Emission ist. Somit kann die Messeinrichtung zu einer gleichzeitigen Messung von Stickstoffdioxid und -monoxid ausgelegt sein. Dabei können die Konzentrationen von Stickstoffdioxid und Stickstoffmonoxid gleichzeitig auf Basis einer kombinierten Raman- und Chemilumineszenz-Messung ermittelt werden.

Bei einer Ausführungsform kann es vorgesehen sein, dass die zweite Messzelle einen Einlass und einen Auslass für das Fluid und einen weiteren Einlass aufweist, wobei durch den weiteren Einlass der Reaktant in die zweite Messzelle gelangen kann, wobei der Reaktant mit der zweiten Komponente des Fluids chemisch reagieren und eine Chemolumineszenz-Emission erzeugen kann - und somit die zweite Anregung sein kann.

Bei einer Ausführungsform kann es vorgesehen sein, dass Optikeinrichtung eine Kammer zur Aufnahme des Reaktants umfasst.

Bei einer Ausführungsform kann es vorgesehen sein, dass der Reaktant der Kammer über eine Kapillare zugeführt werden kann.

Bei einer Ausführungsform kann es vorgesehen sein, dass die Kammer eine mit der zweiten Messzelle gemeinsame Wand aufweist, wobei der weitere Einlass an der Wand angeordnet bzw. in der Wand ausgebildet ist.

Bei einer Ausführungsform kann es vorgesehen sein, dass die Kammer von der zweiten Messzelle durch eine Schlitzblende getrennt ist, beispielsweise die gemeinsame Wand als eine Schlitzblende ausgebildet ist.

Bei einer Ausführungsform kann es vorgesehen sein, dass die Öffnung der Schlitzblende in einem Brennpunkt zumindest einer Linse der Optikvorrichtung angeordnet ist.

Bei einer Ausführungsform kann es vorgesehen sein, dass die Öffnung der Schlitzblende in ihrer Größe der Größe einer Photokathode der Detektoreinrichtung korrespondiert, vorzugsweise in etwa so groß, wie die Photokathode ist.

Bei einer Ausführungsform kann es vorgesehen sein, dass die erste Messzelle druckfest ist.

Bei einer Ausführungsform kann es vorgesehen sein, dass die erste Messzelle zumindest ein druckfestes Fenster aufweist, wobei jedes druckfeste Fenster als eine Eintrittsoptik der Optikeinrichtung ausgebildet ist.

Bei einer Ausführungsform kann es vorgesehen sein, dass die Optikeinrichtung eine erste Empfangsoptikvorrichtung und eine zweite Empfangsoptikvorrichtung umfasst.

Bei einer Ausführungsform kann es vorgesehen sein, dass die erste Empfangsoptikvorrichtung von der zweiten Empfangsoptikvorrichtung baulich getrennt ist.

Bei einer Ausführungsform kann es vorgesehen sein, dass die erste Empfangsoptikvorrichtung die zweite Messzelle und/oder die Kammer umfasst.

Bei einer Ausführungsform kann es vorgesehen sein, dass die erste Anregung zumindest eine weitere, von der ersten Komponente verschiedene Komponente des Fluids in der ersten Messzelle anregt, so dass die erste Lichtemission eine Lichtemission der ersten Komponente und eine Lichtemission der weiteren Komponente umfasst.

Bei einer Ausführungsform kann es vorgesehen sein, dass die zweite Empfangsoptikvorrichtung der ersten Messzelle zugeordnet und dazu eingerichtet ist, die Lichtemission der weiteren Komponente zu selektieren und in Richtung der Detektoreinrichtung zu leiten, die Detektoreinrichtung der zweiten Empfangsoptikvorrichtung zugeordnet ist und dazu eingerichtet ist, die Lichtemission der weiteren Komponente zu messen.

Bei einer Ausführungsform kann es vorgesehen sein, dass die weitere Komponente von der ersten und von der zweiten Komponente unterschiedlich ist, beispielsweise Sauerstoff ist. Sauerstoff ist beispielsweise als Messkomponente bei NOx Emissionsmessungen vorgeschrieben.

Bei einer Ausführungsform kann es vorgesehen sein, dass die erste Empfangsoptikvorrichtung und die zweite Empfangsoptikvorrichtung eingerichtet sind, die Lichtemission der ersten Komponente zu selektieren. Dies kann z.B. dadurch erreicht werden, dass in der ersten Empfangsoptikvorrichtung und in der zweiten Empfangsoptikvorrichtung derselbe Bandpassfilter eingesetzt wird.

Bei einer Ausführungsform kann es vorgesehen sein, dass die weitere Lichtemission für die weitere Komponente spezifisch/charakteristisch ist.

Bei einer Ausführungsform kann es vorgesehen sein, dass die Optikeinrichtung zumindest eine Bandpassfiltereinrichtung umfasst, wobei die Bandpassfiltereinrichtung dazu ausgebildet ist, fluidkomponentenspezifische Lichtemissionen zu selektieren.

Bei einer Ausführungsform kann es vorgesehen sein, dass die zumindest eine Bandpassfiltereinrichtung zwei oder mehr Bandpassfilter aufweist.

Bei einer Ausführungsform kann es vorgesehen sein, dass ein oder mehrere der Bandpassfilter einen oder mehr Interferenzfilter aufweisen.

Bei einer Ausführungsform kann es vorgesehen sein, dass unterschiedliche Bandpassfilter unterschiedliche Zentralwellenlängen und Halbwertsbreiten aufweisen.

Bei einer Ausführungsform kann es vorgesehen sein, dass die jeweiligen Zentralwellenlängen und Halbwertsbreiten passend zur Detektion der jeweiligen Lichtemission gewählt sind.

Bei einer Ausführungsform kann es vorgesehen sein, dass die Bandpassfiltereinrichtung ein an der ersten Empfangsoptikvorrichtung angeordnetes Filterrad und einen weiteren in der zweiten Empfangsoptikvorrichtung angeordneten Bandpassfilter umfasst.

Bei einer Ausführungsform kann es vorgesehen sein, dass die zumindest eine zweite Stufe zum Selektieren der räumlich gefilterten Raman-Strahlung vorgesehen ist.

Bei einer Ausführungsform kann es vorgesehen sein, dass eine Austrittsoptik der ersten Stufe, welche Austrittsoptik z.B. als eine fokussierende Linse ausgebildet sein kann, die Kammer an einer der (mit der zweiten Messzelle gemeinsamen) Wand, z.B. der Schlitzblende gegenüberliegenden Seite abschließt.

Bei einer Ausführungsform kann es vorgesehen sein, dass eine Eintrittsoptik der zweiten Stufe, wobei die Eintrittsoptik beispielsweise als eine kollimierende Linse ausgebildet sein kann, die zweite Messzelle detektoreinrichtungsseitig - also an einer der (mit der Kammer gemeinsamen) Wand gegenüberliegenden Seite - abschließt.

Weitere Merkmale, Eigenschaften und Vorteile der vorliegenden Erfindung ergeben sich aus der nachfolgenden Beschreibung unter Bezugnahme auf die beiliegenden Figuren. Darin zeigen schematisch:

FIG 1          schematische Darstellung eines Raman-Photometers in perspektivischer Ansicht,
FIG 2          eine erste Schnittdarstellung des Raman-Photometers der FIG 1,
FIG 3          eine zweite Schnittdarstellung des Raman-Photometers der FIG 1,
FIG 4 bis FIG 6     verschiedene Ramanmessungen.

In den Ausführungsbeispielen und Figuren können gleiche oder gleich wirkende Elemente jeweils mit den gleichen Bezugszeichen versehen sein.

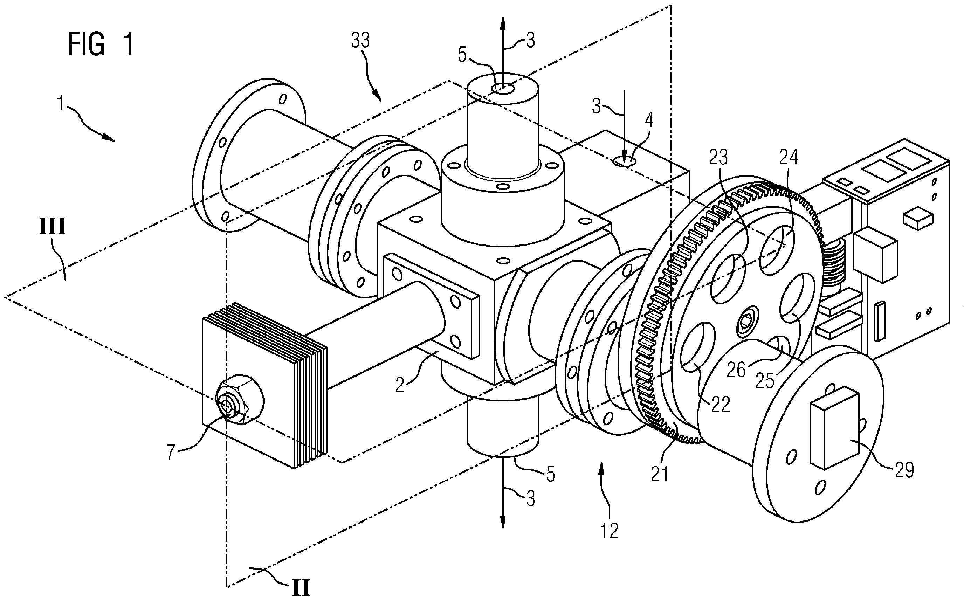

FIG 1 zeigt ein Raman-Photometer bzw. ein Raman-Streulichtphotometer 1, welches einer erfindungsgemäßen Messeinrichtung entsprechen kann. Raman-Photometer 1 weist eine vorzugsweise druckfeste (z.B. 10 bar), beispielsweise würfelförmige erste Messzelle 2 auf, die von einem Fluid 3, z.B. einem Gas, insbesondere einem Abgas aus einer Verbrennung, mit erhöhtem geregeltem Druck bis zu 10 bar absolut durchströmt werden kann. Das Fluid 3 kann über einen Gaseinlass 4 einer Gaseinlasskammer in die erste Messzelle 2 eintreten und diese an zwei Gasauslässen 5 verlassen, wobei die Gasauslässe 5 vorzugsweise rechtwinklig zu der ersten Messzelle 2 angeordnet sind und in der Zeichnung nach oben und unten aus der ersten Messzelle 2 herausführen.

Eine Laserlichtvorrichtung mit einer Laserlichtquelle 7 ist der ersten Messzelle 2 zugeordnet und vorzugsweise gegenüber der Gaseinlasskammer an der ersten Messzelle 2 angeordnet und vorzugsweise befestigt.

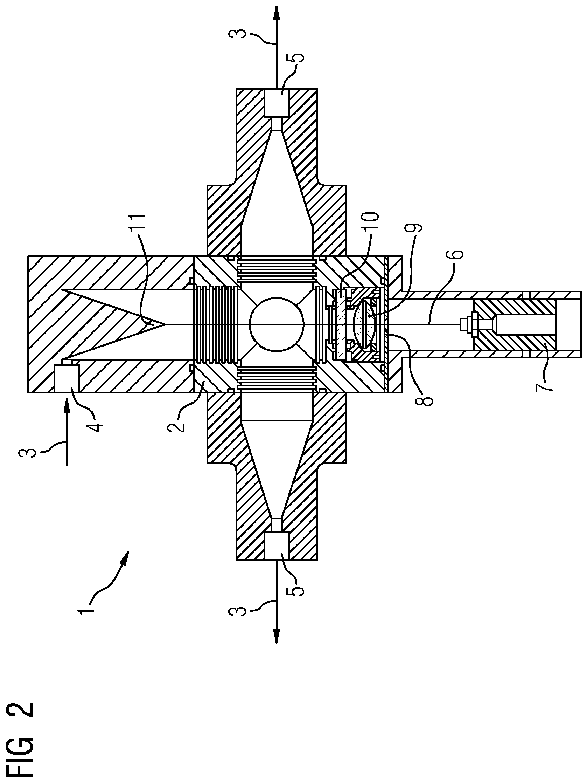

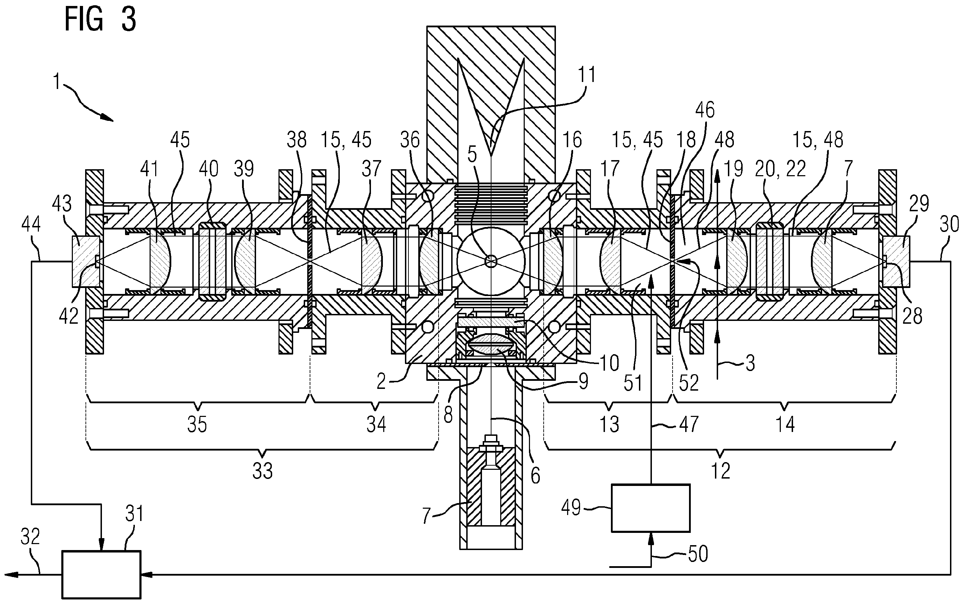

FIG 1 ist zu entnehmen, dass die Messeinrichtung 1 eine Optikeinrichtung 12, 33 aufweist. Die Optikeinrichtung 12, 33 ist ebenfalls der ersten Messzelle 2 zugeordnet und ist dazu eingerichtet, durch eine mittels der Laserlichtquelle 7 bereitgestellte Laseranregung 6 in der ersten Messzelle 2 ausgelöste Lichtemissionen 15, 45 (siehe FIG 2 und FIG 3) aufzufangen und auf eine Detektoreinrichtung 29, 43 abzubilden.

Die Optikeinrichtung kann eine erste Empfangsoptikvorrichtung 12 und/oder eine zweite Empfangsoptikvorrichtung 33 aufweisen.

Des Weiteren ist FIG 1 zu entnehmen, dass die erste Empfangsoptikvorrichtung 12 ein Filterrad 21 mit mehreren Bandpassfiltern 20 (siehe FIG 2 und FIG 3), 22, 23, 24, 25, 26 zur fluidkomponentenspezifischen Selektion der emittierten Strahlung aufweist.

FIG 2 zeigt eine Schnittdarstellung des Rahman-Photometers 1.

Der Lichtstrahl 6 der Laserlichtquelle 7 fällt beispielsweise durch eine Blende 8, über eine Fokussierlinse 9 und ein Interferenzfilter 10 in die Messzelle 2 und durchstrahlt diese in Richtung zu dem Gaseinlass 4, wo er beispielsweise in einer rückstreuungsfreien Lichtfalle 11 aufgefangen wird. Der durch die Linse 9 fokussierte Linienabschnitt (Strahltaille) des Lichtstrahls (Gaußstrahl) 6 kann in der Mitte der ersten Messzelle 2 positioniert sein, um beispielsweise dort eine maximale Lichtausbeute bei der Anregung entsprechender Fluidkomponenten zu erzeugen. Darüber hinaus kann die Mitte der ersten Messzelle in einem Brennpunkt der Eintrittslinsen 16, 36 der ersten bzw. der zweiten Empfangsoptikvorrichtung 12, 33 angeordnet sein.

Die Strahlqualität und Linienbreite des Laserstrahls 6 kann durch eine Blende 8 und ein beispielsweise schmalbandiges Interferenzfilter 10 verbessert werden, so dass das Hintergrundsignal in der ersten Messzelle 2 auf ein niedriges Niveau gebracht werden kann. Das Hintergrundsignal kann zudem durch die Anordnung und Gestaltung der Gasauslässe 5 und der Lichtfalle 11 stark reduziert werden.

FIG 3 zeigt eine weitere Schnittdarstellung des Rahman-Photometers 1.

Die erste Empfangsoptikvorrichtung 12 und die zweite Empfangsoptikvorrichtung 33 für die an den Molekülen des Fluids 3 gestreuten Raman-Photonen 15, 45 können rechtwinklig zu dem Laserstrahl 6 an der ersten Messzelle 2 angeordnet vorzugsweise angebaut sein. Vorzugsweise ist die zweite Empfangsoptikvorrichtung 33 der ersten Empfangsoptikvorrichtung 12 gegenüberliegend angeordnet.

An dieser Stelle sei angemerkt, dass die Verwendung beider Empfangsoptikvorrichtungen 12, 33 optional ist.

Durch den Laser 7 können eine oder mehrere Komponenten des Fluids 3 angeregt werden. Somit können in der ersten Messzelle 2 mehrere wellenlängenspezifische Lichtemissionen 15, 45 entstehen, die durch Laseranregung 6 verschiedener Komponenten des Fluids 3 ausgelöst werden.

In einer Ausführungsform können verschiedene durch Laseranregung 6 anregbare Fluidkomponenten lediglich mit der ersten Empfangsoptikvorrichtung 12 detektiert werden, indem verschiedene Bandpassfilter 20, 22, 23, 24, 25, 26 abwechselnd eingesetzt werden.

Um die verschiedenen Lichtemissionen 15, 45 aus der ersten Messzelle 2 gleichzeitig zu detektieren, ist die Verwendung der zweiten Empfangsoptikvorrichtung 33 vorteilhaft. In diesem Fall können in der ersten und in der zweiten Empfangsoptikvorrichtungen 12, 33 verschiedene Bandpassfilter 20, 40 verwendet werden, die zu der jeweiligen Lichtemission 15, 45 passend ausgewählt sind.

Die Auswahl eines passenden Bandpassfilters 20, 22, 23, 24, 25, 26, 40 für Detektion einer entsprechenden Raman-Strahlung 15, 45 kann tabellarisch wie folgt zusammengefasst werden.

Tabelle 1: Auswahl der Zentralwellenlänge des Bandpassfilters für verschiedene Gaskomponenten bei einem Laser mit einer Wellenlänge von 402 nm.

| Gaskomponente | Ramanshift [cm-1] | relativer Raman-Streuquerschnitt zu $N_2$ | Zentralwellenlänge der Ramanbande bei einer 402 nm Anregung [nm] |
|---|---|---|---|
| $H_2$ (Wasserstoff) | 4155 | 3.9 | 483 |
| $N_2$ (Stickstoff) | 2331 | 1 | 444 |
| $CO_2$ (Kohlendioxid) | 1285 | 0.8 | 424 |
| | 1388 | 1.1 | 426 |
| | 1265 | | 424 |
| $O_2$ (Sauerstoff) | 1555 | 1.0 | 429 |
| $NO_2$ (Stickstoffdioxid) | 1500 | RRS mit 402nm Anregung | 428 |
| | 1440 | RRS mit 402nm Anregung | 427 |
| | 1315 | RRS mit 402nm Anregung | 424 |
| | 3200 | RRS mit 402nm Anregung | 461 |
| | 3915 | RRS mit 402nm Anregung | 477 |
| $H_2O$ | 3650 | 4.5 | 471 |
| | 3657 | | 471 |

Dabei steht RRS für Resonante Raman Streuung.

Aus der Tabelle 1 geht hervor, dass die Messung von Sauerstoff bei 429 nm mit einem Bandpassfilter, mit einer Halbwertsbreite (FWHM) von 10 nm, von $CO_2$ (bis zu 15 Vol.% im Messgas 3 enthalten) gestört werden kann. Wenn der Bandpassfilter für $O_2$ nicht entsprechend schmal gewählt werden kann, kann zusätzlich ein Bandpassfilter für $CO_2$ zum Beispiel im Filterrad 21 eingesetzt werden und über eine serielle Messung eine Zweikomponentenbestimmung (nach dem MLR-Kalibrierverfahren, Matrixinversion nach der Methode der Multiplen Linearen Regression) vorgenommen werden. Die optimale Wellenlänge für die Detektion von $NO_2$ liegt bei 477 nm, wobei eine mögliche Querempfindlichkeit zu Wasserstoff und Wasser durch eine FWHM des Bandpassfilter von 10 nm ausgeschlossen werden kann.

Die Empfangsoptikvorrichtungen 12, 33 können jeweils zwei Stufen 13, 14, und 34, 35 aufweisen, wobei in der jeweils ersten Stufe 13, 34 das gestreute Licht 15, 45 mithilfe von einer oder mehreren Linsen 16, 17 auf eine rechteckige Blende 18 fokussiert wird. Die Blende 18 kann beispielsweise als eine Schlitzblende ausgebildet sein. Die Öffnung 52 kann beispielsweise eine Größe von ca. 1 × 4 mm aufweisen.

Durch die ersten Stufen 13, 34 kann eine räumliche Filterung des gestreuten Lichts 15, 45 erfolgen, so dass in die jeweilige zweite Stufe 14, 35 nur solche Photonen gelangen, die aus einem begrenzten Volumen rund um den fokussierten Linienabschnitt des Laserstrahls 6 gestreut wurden. Die Eintrittslinse 16, 36 der jeweiligen ersten Stufe 13, 34 kann als druckfester Abschluss bzw. druckfestes Fenster der ersten Messzelle 2 dienen.

In der jeweiligen zweiten Stufe 14, 35 durchläuft das mittels einer Linse 19, 39 kollimierte gestreute Licht 15, 45 den jeweiligen Bandpassfilter 20, 40. Jeder der im Rahmen der vorliegenden Offenbarung thematisierten Bandpassfilter 20, 22, 23, 24, 25, 26, 40 können in Form eines schmalbandigen (Halbwertsbreite (FWHM) = 5 - 10nm für die Raman-Photonen) Interferenzfilters oder ggf. zweier hintereinander liegender Interferenzfilter ausgebildet sein. Die von dem jeweiligen Bandpassfilter 20, 40 gaskomponentenspezifisch selektierten Photonen können mittels einer weiteren Linse 21, 41 auf einer beispielsweise rechteckigen Photokathode 28, 42 (zum Beispiel ca. 1 × 4 mm groß) eines entsprechenden Photomultipliers 29, 43 abgebildet werden, mittels dessen sie einzelnen nachgewiesen werden können. Jeder Photomultiplier 29, 43 erzeugt jeweils ein Ausgangssignal (z.B. ein Raman-Signal, wenn die Photonen aus der ersten Messzelle 2 detektiert werden) 30, 44, das zu der Anzahl der von der Photokathode 28, 42 absorbierten Photonen pro Zeiteinheit proportional ist und einer Auswerteeinrichtung (Prozessor) 31 zur Auswertung und Ermittlung sowie Ausgabe 32 der Konzentration der gemessenen Fluidkomponenten zugeführt wird.

Der jeweilige Photomultiplier 29, 43 dient dazu, die, insbesondere auch wegen der geringen Laserleistung, in nur sehr geringer Anzahl erzeugten Raman-Photonen in ein ausreichend starkes Ausgangssignal 30, 44 umzuwandeln. Außerdem können die Messungen bei einem erhöhten Druck in der ersten Messzelle 2 von, z.B., 5 bar absolut erfolgen, weil die Anzahl der erzeugten Raman-Photonen und damit das Raman-Signal 29, 43 proportional mit dem Messgasdruck ansteigen. Dazu kann an den, ggf. zusammengeführten, Gasauslässen 5 ein Druckregler vorgesehen sein (nicht gezeigt).

In einer Ausführungsform kann eine Laserlichtquelle 7 mit einer Wellenlänge passend zum elektronischen Übergang im $NO_2$ Molekül eingesetzt werden, um einen empfindlichen (Nachweisgrenze unter 0,5 ppm (parts per million)) Nachweis von $NO_2$ zu ermöglichen. Beispielsweise kann hierzu eine Wellenlänge einer Laserdiode von rund 400 nm, beispielsweise 402 nm, insbesondere 405 nm zweckmäßig sein. Die vorgenannten kurzen Wellenlängen können auch bei $O_2$ und weiteren Komponenten ($CO_2$ und $N_2$) im Messgas 3 für eine gute Ausbeute an Raman-Photonen sorgen (proportional zu $\frac{1}{\lambda^4}$) und verursachen keine Fluoreszenz. Dabei ist es bei der Ramanstreuung an $NO_2$ vorteilhaft, dass das Prinzip der Resonanten Raman Streuung (RRS) durch die stimulierte Emission aus dem angeregten elektronischen Energieniveau zunutze gemacht werden kann. Das kann zu einer etwa 100-fachen Verstärkung des Ausgangssignals 30, 44 und damit zu einer Verbesserung der Nachweisgrenze führen.

In einer Ausführungsform können die Bandpassfilter 20, 40 so ausgewählt werden, dass beispielsweise Stickstoffdioxid und Sauerstoff nach dem vorhin beschrieben Raman-Messverfahren gleichzeitig gemessen werden.

Außerdem kann die Laserleistung zur Erfüllung des Ex-Schutzes auf unter 35 mW begrenzt werden, wobei eine Nachweisgrenze für Stickstoffdioxid < 1 ppm bei einer Messdauer von einer Sekunde erreicht werden kann.

Das Raman-Photometer 1 sieht außerdem eine zweite Messzelle 46 vor. Die zweite Messzelle 46 ist beispielsweise nicht druckfest.

Die zweite Messzelle 46 ist derart ausgebildet, dass das Messgas 3 ihr zugeführt werden kann und, wenn das das Messgas 3 in der zweiten Messzelle 46 zugeführt ist, zumindest eine zweite Komponente des Messgases 3 in der zweiten Messzelle 46 durch eine zweite, von der ersten Anregung 6 unterschiedlichen Anregung angeregt werden kann.

Die zweite Messzelle 46 ist als eine Chemolumineszenz-Messzelle ausgeführt. Die zweite Komponente des Messgases 3 ist beispielsweise Stickstoffmonoxid, das durch das Zuführen eines Reaktants, z.B. von Ozon 47 in einen angeregten Zustand überführt wird und infolge einer Abregung Licht emittiert - Chemolumineszenz 48.

Die Chemilumineszenz 48 der Reaktion von Stickstoffmonoxid (NO) mit Ozon 47 findet in einem Bereich zwischen etwa 600 nm bis 3000 nm statt (siehe z.B.: http://teaching.shu.ac.uk/hwb/chemistry/tutorials/molspec/lumin1.htm, abgerufen am 17.12.2020). Die Photomultiplier 29, 43 sind vorzugsweise bis etwa 700 nm empfindlich. Somit kann es zweckmäßig sein, für die Messung der Chemilumineszenz Photonen einen Bandpassfilter 22 von 650 nm mit FWHM von etwa 100 nm einzusetzen.

Der jeweilige Photomultiplier 29, 43 dient auch dazu, die Chemolumineszenz-Photonen 48 in ein Ausgangssignal (Chemolumineszenz-Signal) 30 umzuwandeln.

Somit kann das Ausganssignal ein Raman- oder ein Chemolumineszenz-Signal sein.

Anand der Ausgangssignale 30, 44 kann die Konzentration 32 der ersten und/oder der zweiten Komponente, beispielsweise des Stickstoffdioxids und des Stickstoffmonoxids ermitteln. FIG 3 lässt erkennen, dass das Ozon 47 in einem Ozongenerator 49 erzeugt werden kann. Beispielsweise kann das Ozon 47 entweder aus trockener Luft 50 in einer dielektrisch behinderten Gasentladung erzeugt oder mit Hilfe einer UV-Lampe (beispielsweise mit einem Intensitätsmaximum < 220 nm) erzeugt werden. Vorteilhaft ist bei der UV-Lampe, dass hierbei keine Stickoxide aus dem Luftstickstoff erzeugt werden.

Das Ozon 47 kann beispielsweise über eine Kapillare (nicht gezeigt) der zweiten Messzelle 46 zugeführt werden.

Erfindungsgemäß ist die zweite Messzelle 46 als ein Teil der Optikeinrichtung 12, 33 ausgebildet. Insbesondere kann die zweite Messzelle 46 als ein integraler Bestandteil der ersten Empfangsoptikvorrichtung 12 (FIG 3) oder der zweiten Empfangsoptikvorrichtung 33 (nicht gezeigt) ausgeführt sein.

FIG 3 lässt erkennen, dass die zweite Messzelle 46 durch einen Raum zwischen der ersten und der zweiten Stufe 13, 14 der ersten Empfangsoptikvorrichtung 12 angeordneten Schlitzblende 18 und der (Eintritts-) Linse 19 der zweiten Stufe 14 der ersten Empfangsoptikvorrichtung 12 gebildet sein kann.

Die Austrittslinse 17 der ersten Stufe 13 kann beispielsweise als eine fokussierende Linse ausgeführt sein. Die Eintrittslinse 19 der zweiten Stufe kann beispielsweise als eine kollimierende Linse ausgeführt sein.

An dieser Stelle sei angemerkt, dass es den Figuren 1 bis 3 zu entnehmen ist, dass die erste und die zweite Empfangsoptikvorrichtung 12, 33 und insbesondere die Stufen 13, 14, 34, 35 in etwa die Form eines hohlen Zylinders aufweisen, wobei die optisch aktiven Elemente (Linsen, Blenden, Bandpassfilter) in den Empfangsoptikvorrichtungen 12, 33 und insbesondere in der Stufe 13, 14, 34, 35 aufgenommen sind. Die jeweiligen Stufen 13 und 14 bzw. 34 und 35 können miteinander verschraubt sein. Die Empfangsoptikvorrichtungen 12, 33 können mit der ersten Messzelle 2 ebenfalls verschraubt sein.

FIG 3 lässt weiterhin erkennen, dass der Reaktant 47 der zweiten Messzelle 46 über eine Kammer 51 zugeführt werden kann. Die Kammer 51 kann in der ersten Stufe 13 der ersten Empfangsoptikvorrichtung 12 ausgebildet sein. Beispielsweise kann die Kammer 51 durch einen Raum zwischen der Austrittslinse 17 und der Schlitzblende 18 gebildet sein

Es kann zweckdienlich sein, wenn der Reaktant 47, zum Beispiel Ozon, der Kammer 51 über die Kapillare zugeführt wird.

Während des Messvorgangs, bei dem zumindest die zweite Komponente des Fluids 3 beispielsweise Stickstoffmonoxid gemessen wird, durchströmt das Messgas 3 die zweite Messzelle 46 - durch hier nicht gezeigte Gaseinlässe und -auslässe. Gleichzeitig kann der Reaktant 47 der ersten Kammer 51 derart zugeführt werden, dass er durch eine Öffnung 52 der Schlitzblende 18 in die zweite Messzelle 46 gelangt. In diesem Fall findet eine Vermischung des Reaktants 47 mit dem Fluid 3, die zu der Chemolumineszenz 48 führt, im Bereich der Öffnung 52 der Schlitzblende 18 statt.

Es kann zweckmäßig sein, die Öffnung 52 der Schlitzblende(n) 18, 38 in der gleichen Größe zu wählen, wie die Kathode(n) 28, 42 ist(sind).

In einer Ausführungsform kann die Öffnung 52 der Schlitzblende 18 in einem gemeinsamen Brennpunkt der Austrittslinse 17 der ersten Stufe 13 und der Eintrittslinse 19 der zweiten Stufe 14 angeordnet sein. Auf diesem Wege können durch die Chemolumineszenz entstehende Photonen 48 besonders einfach aufgefangen und auf die Kathode 28 des Photomultipliers 29 abgebildet werden. Dabei kann, wie oben erörtert, ein Bandpassfilter 22 von 650 nm mit einer FWHM von etwa 100 nm in die zweite Stufe 14 mittels des Filterrads 21 eingesetzt werden, um die Chemolumineszenz-Photonen 48 selektiv nachzuweisen.

Die in den Figuren 1 bis 3 Messeinrichtung 1 ermöglicht eine gleichzeitige Messung von Stickstoffdioxid (die erste Komponente des Fluids 3) und Stickstoffmonoxid (die zweite Komponente des Fluids 3). Dabei muss die Ozon-dosierung während der $NO_2$-Ramanmessung nicht unterbrochen werden, wie es der Fall wäre, wenn das Fluid 3 in der ersten Messzelle 2 durch das Laserlicht 6 und durch Ozon 47 angeregt würde. Bei einer solchen gleichzeitigen Anregung in derselben Messzelle würde bei der Chemolumineszenz-Messung auch das $NO_2$-Reaktionsprodukt im Ramansignal mitgemessen werden. Außerdem würden bei der Reaktion des NO mit dem überschüssigen Ozon weitere Stickoxide ($N_2O_5$, $NO_3$) entstehen, die im Ramansignal des $NO_2$ nicht erfasst werden, so dass eine separate Messung des NO und $NO_2$ über die beiden Messverfahren notwendig ist, um auf die $NO_x$ Konzentration 32 zu schließen.

Das in dieser Offenbarung beschriebene Messverfahren kann mit einer Reihe von Kalibriergasen einfach kalibriert werden. Die Messung kann am kontinuierlichen Gasstrom durchgeführt werden, wobei das Ergebnis im Sekundentakt zur Verfügung steht.

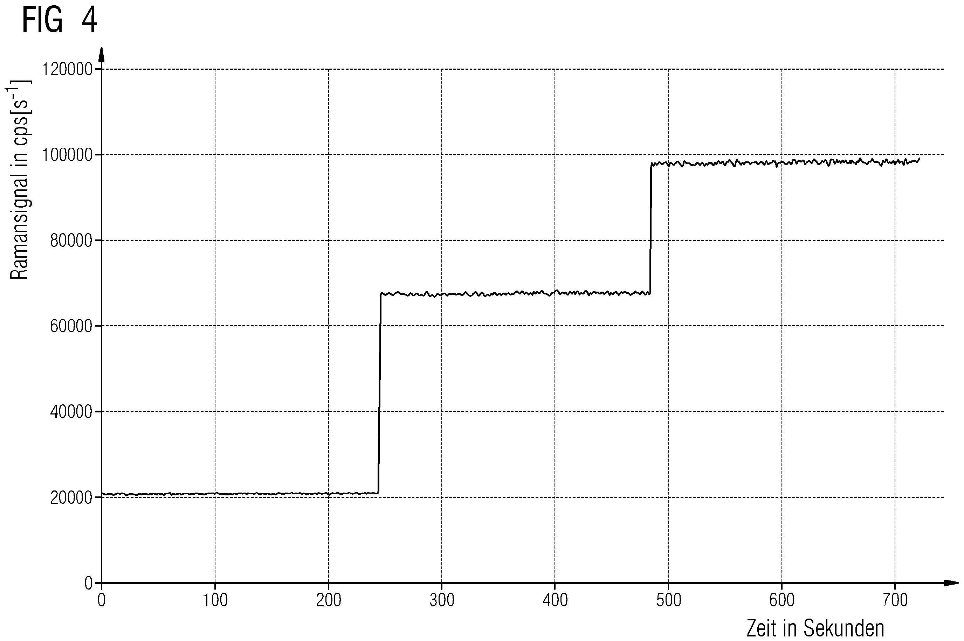

Figuren 4 bis 6 zeigen exemplarische Messergebnisse zu einer gleichzeitigen $NO_2$- und $O_2$-Konzentrations-bestimmung mittels der Messeinrichtung 1 der Figuren 1 bis 3.

Die Ramanphotonen 15, 45 aus den elektronisch angeregten $NO_2$ Molekülen werden von der ersten Empfangsoptikvorrichtung 12, ausgestattet mit einem Bandpassfilter 20 mit einer zentralen Wellenlänge (CWL) von 486 nm (oder mit CWL 477 nm), mit dem Photomultiplier 29 gezählt.

Die $O_2$-Messung findet mit einer Bandpassfiltereinrichtung 40 statt. Die Bandpassfiltereinrichtung 40 umfasst einen Bandpassfilter bei CWL 430 nm. Dieser Bandpassfilter kann aber auch Ramanphotonen von $NO_2$ und $CO_2$ (Koh-lenstoffdioxid) passieren lassen. Zur Kompensation der $O_2$-Messung wurde deswegen ein zusätzlicher Bandpassfilter mit CWL 420 nm in der Bandpassfiltereinrichtung 40 vorgesehen, um die Störkomponenten beispielsweise mit Hilfe einer MLR-Kalibrierung (Matrixinversion nach der Methode der Multiplen Linearen Regression) $CO_2$ und $NO_2$ zu kom-pensieren.

Im Filterrad 21 können beispielsweise folgende Bandpassfilter (BPF) eingesetzt werden:

    I. Semrock CWL 420 nm FWHM 5 nm
    II. Edmund Optics CWL 430 nm FWHM 10 nm
    III. Edmund Optics CWL 486 nm FWHM 10 nm

Es wurde ein Prüfgas mit der Konzentration 960 mg/m³ $NO_2$ (rel. Messunsicherheit <2%) durch die erste Messzelle 2 geströmt (1l/min). Das Prüfgas enthielt zur Stabilisierung des NO2 auch 19,9 Vol.% O2, wobei der der Rest des Prüfgases N2 war. Auf der Basis des Rauschbandes, des in Sekundentakt aufgezeichneten Ramansignals 30, 44, ergibt sich eine minimal nachweisbare Konzentration von 3 mg/m³ (entspricht ca. 1,5ppm). Die Nachweisgrenze von

$O_2$ liegt bei dieser Messung bei 0,13 Vol.% und von CO2 bei 0,22 Vol.%.

FIG 4 zeigt eine Ramanmessung von 960 mg/m$^3$ $NO_2$ mit 19,9 Vol.% $O_2$. Signal bis 240 sek. mit dem BPF I., dann mit BPF II. und ab 480 sek. mit BPF III. Ramansignal in Signalpulse pro Sekunde.

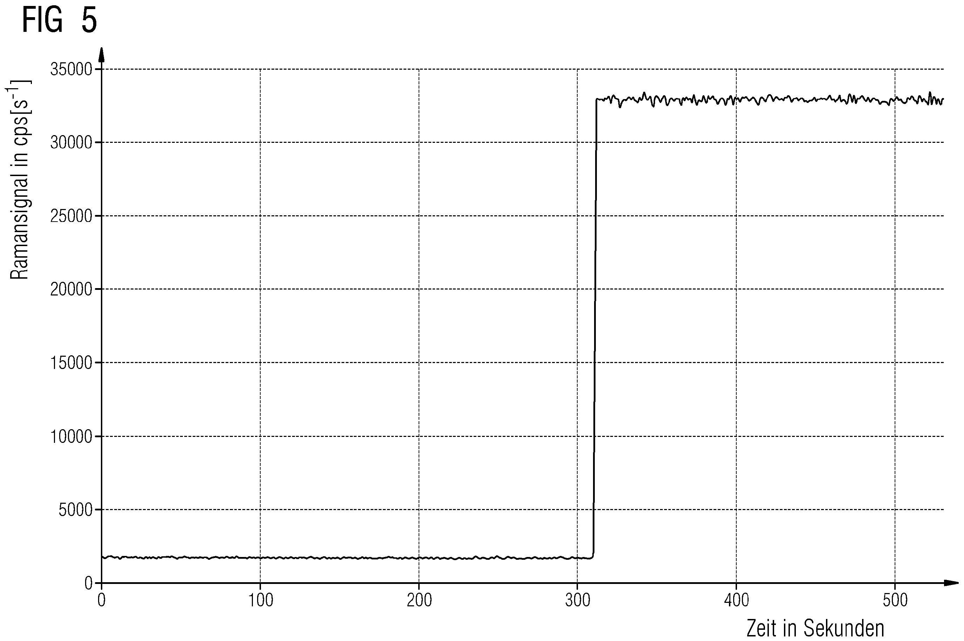

FIG 5 zeigt Ramanmessung von synthetischer Luft (80 Vol.% N2 mit 20 Vol.% $O_2$) • Signal bis 310 sek. mit dem BPF (Bandpassfilter) I., danach mit BPF II. Die Messung mit BPF III. ist nicht dargestellt, weil nahezu nur das Hintergrundsignal des BPF III. vorliegt (ca. 470 cps (engl. für counts per second)).

Die Messergebnisse in FIG 4 und FIG 5 bei etwa gleichem $O_2$-Gehalt von 20 Vol.%, zeigen einen höheren Beitrag von $NO_2$ bei den BPF (Bandpassfiltern) I. und II. bedingt durch die resonante Ramanstreuung. Das Dunkelsignal des Photomultipliers (bei ausgeschaltetem Laser) liegt bei fast vernachlässigbaren 10cps, wird allerdings von den Ramansignalen abgezogen.

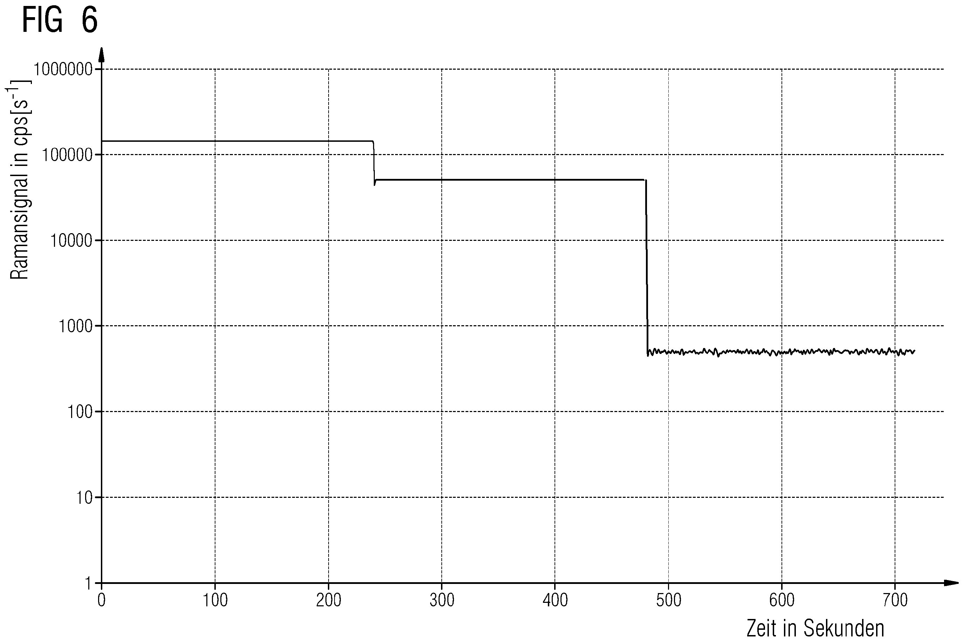

FIG 6 zeigt zusätzlich eine Ramanmessung von 100 Vol.% $CO_2$. Signal bis 240 sek. mit dem BPF I., dann mit BPF II. und ab 480s mit BPF III. bei einer logarithmischen Signal-Skalierung.

In einer praktischen Abgasanwendung kann es zweckdienlich sein, das O2-Signal (bei hauptsächlich BPF II.) mit dem CO2-Signal zu kompensieren, unabhängig davon, ob die $CO_2$ Konzentration höher als 15 Vol.% liegt oder nicht.

Das im Rahmen dieser Offenbarung beschriebene kombinierte Messverfahren zur NOx und $O_2$ Bestimmung kann mit einer Reihe von Prüfgasen (NO, $NO_2$, $O_2$, $CO_2$ alle in Rest $N_2$) kalibriert werden. Der Einfluss von $CO_2$ und $H_2O$ auf die Chemilumineszenz des NO durch Fluoreszenzlöschung (quenching) kann durch die Messung der spezifischen Ramanphotonen von $CO_2$ und $H_2O$ verringert werden. Die Messung kann kontinuierlich am extraktiv entnommenen Gasstrom durchgeführt und die Konzentrationen der einzelnen Komponenten können, bedingt durch die Taktung des Filterrads, spätestens im Minutentakt zur Verfügung stehen. Wenn auf die Sauerstoffmessung verzichtet wird, kann die NOx-Messung auch mit zwei Empfangsoptiken simultan durchgeführt werden. Eine kleinere Nachweisgrenze kann durch Erhöhung der Laserleistung und durch Messwertmittelung erreicht werden.

Die Bezugsziffern in den Ansprüchen dienen lediglich zum besseren Verständnis der vorliegenden Erfindung und bedeuten auf keinen Fall eine Beschränkung der vorliegenden Erfindung.

Obwohl die Erfindung im Detail durch Ausführungsbeispiele näher illustriert und beschrieben wurde, ist die Erfindung nicht durch die offenbarten Beispiele eingeschränkt. Variationen hiervon können vom Fachmann abgeleitet werden, ohne den Schutzumfang der Erfindung, wie er durch die nachfolgenden Patentansprüche definiert wird, zu verlassen. Insbesondere können die im Zusammenhang mit den hier beschriebenen Messeinrichtungen offenbarte Merkmale sinnvollerweise zur Weiterbildung der hier beschriebenen Verfahren eingesetzt werden und *vica versa*.


**Patentansprüche**

1.    Verfahren zur Messung von mindestens zwei verschiedenen Komponenten eines Fluids (3), wobei das Fluid (3) einer ersten und einer zweiten Messzelle (46) zugeführt wird, wobei in der ersten Messzelle (2) eine erste Komponente des Fluids (3) mittels einer ersten Anregung (6) angeregt wird und dadurch eine erste Lichtemission (15, 45) ausgelöst wird, wobei in der zweiten Messzelle (46) zumindest eine zweite Komponente des Fluids (3) mittels einer zweiten, von der ersten Anregung (6) unterschiedlichen Anregung angeregt wird und dadurch eine zweite Lichtemission (48) ausgelöst wird, wobei die erste Lichtemission (15, 45) und die zweite Lichtemission (48) mittels einer Optikeinrichtung (12, 33) aufgefangen und in Richtung einer Detektoreinrichtung (29, 43) geleitet werden, wobei die Detektoreinrichtung (29, 43) die erste Lichtemission (15, 45) und die zweite Lichtemission (48) misst, wobei die erste Anregung eine Laseranregung (6) ist,
**dadurch gekennzeichnet, dass**

die erste Lichtemission (15, 45) eine Raman-Strahlung ist,
und die zweite Anregung durch Dosieren eines zu einer Chemilumineszenz mit der zweiten Komponente des Fluids (3) führenden Reaktants (47) erfolgt, wobei
die Optikeinrichtung (12, 33) zumindest eine erste Stufe (13, 34) und zumindest eine zweite, von der ersten Stufe (13, 34) unterschiedliche Stufe (14, 35) aufweist, wobei die zumindest eine erste Stufe (13, 34) zu einer räumlichen Filterung der Raman-Strahlung vorgesehen ist und die zumindest eine zweite Stufe (14, 35) zur Abbildung der räumlich gefilterten Raman-Strahlung auf die Detektoreinrichtung (29, 43) sowie zum Auffangen und Abbilden der Chemilumineszenz auf die Detektoreinrichtung (29, 43) vorgesehen ist, wobei die zweite Messzelle (46) zwischen der ersten Messzelle (2) und der Detektoreinrichtung (29, 43) angeordnet ist, und wobei die Detektoreinrichtung (29, 43) an einem der ersten Messzelle (2) abgewandten Ende der zweiten Stufe (14, 35) angeordnet ist, und die zweite Messzelle (46) an einem der ersten Stufe (13, 34) zugewandten Ende der zweiten Stufe (14, 35) innerhalb der zweiten Stufe (14, 35) ausgebildet ist.

2.    Verfahren nach Anspruch 1, wobei die erste Komponente Stickstoffdioxid ist.

**3.** Verfahren nach Anspruch 1 oder 2, wobei der Reaktant (47) Ozon umfasst und/oder die zweite Komponente Stickstoffmonoxid ist.

**4.** Verfahren nach einem der Ansprüche 1 bis 3, wobei für die Messung der ersten Lichtemission (15, 45) ein erster Bandpassfilter (20, 40) verwendet wird und/oder für die Messung der zweiten Lichtemission ein zweiter Bandpassfilter (22) verwendet wird.

**5.** Verfahren nach einem der Ansprüche 1 bis 4, wobei die erste Lichtemission (15, 45) eine Lichtemission (15) der ersten Komponente und eine Lichtemission (45) einer weiteren, von der ersten Komponente verschiedenen Komponente umfasst.

**6.** Messeinrichtung zur Messung von mindestens zwei verschiedenen Komponenten eines Fluids (3) umfassend

- eine erste Messzelle (2) und eine zweite Messzelle (46),
- eine Anregungsvorrichtung (7),
- eine Optikeinrichtung (12, 33), wobei
die Optikeinrichtung (12, 33) der ersten Messzelle (2) und der zweiten Messzelle (46) zugeordnet ist und zumindest eine erste Stufe (13, 34) und zumindest eine zweite, von der ersten Stufe (13, 34) unterschiedliche Stufe (14, 35) aufweist, und
- eine Detektoreinrichtung (29, 43), wobei

die erste Messzelle (2) derart ausgebildet ist, dass das Fluid (3) der ersten Messzelle (2) zuführbar ist, wobei die Anregungsvorrichtung (7) der ersten Messzelle (2) zugeordnet ist und dazu eingerichtet ist, eine erste Anregung zum Anregen einer ersten Komponente des Fluids (3) zu erzeugen, wenn das Fluid (3) der ersten Messzelle (2) zugeführt ist, wobei
die erste Stufe (13, 34) dazu eingerichtet ist, eine erste durch die erste Anregung auslösbare Lichtemission (15, 45) aufzufangen, räumlich zu filtern und in Richtung der Detektoreinrichtung (29, 43) zu leiten, wobei die erste Anregung eine Laseranregung (6) ist und die erste Lichtemission (15, 45) eine Raman-Strahlung ist, wobei
die Detektoreinrichtung (29, 43) der Optikeinrichtung zugeordnet ist und dazu eingerichtet ist, die Raman-Strahlung (15, 45) zu messen, wobei
die zweite Messzelle (46) derart ausgebildet ist, dass das Fluid (3) der zweiten Messzelle (46) zuführbar ist, wobei,
wenn das Fluid (3) der zweiten Messzelle (46) zugeführt ist, eine zweite Komponente des Fluids (3) in der zweiten Messzelle (46) durch eine zweite, von der ersten Anregung (6) unterschiedlichen Anregung anregbar ist, wobei die zweite Anregung durch Dosieren eines zu einer Chemilumineszenz (48) mit der zweiten Komponente des Fluids (3) führenden Reaktants (47) erfolgt, wobei
die zweite Stufe (14, 35) dazu eingerichtet ist, die räumlich gefilterte Raman-Strahlung auf die Detektoreinrichtung (29, 43) abzubilden und die Chemilumineszenz (48) aufzufangen und in Richtung der Detektoreinrichtung (29, 43) zu leiten,
die Detektoreinrichtung (29, 43) dazu eingerichtet ist, die Chemilumineszenz (48) zu messen, und wobei die zweite Messzelle (46) zwischen der ersten Messzelle (2) und der Detektoreinrichtung (29, 43) angeordnet ist, und die Detektoreinrichtung (29, 43) an einem der ersten Messzelle (2) abgewandten Ende der zweiten Stufe (14, 35) angeordnet ist, und die zweite Messzelle (46) an einem der ersten Stufe (13, 34) zugewandten Ende der zweiten Stufe (14, 35) innerhalb der zweiten Stufe (14, 35) ausgebildet ist.

**7.** Messeinrichtung nach Anspruch 6, wobei die zweite Messzelle (46) einen Einlass und einen Auslass für das Fluid (3) und einen weiteren Einlass (52) aufweist, wobei durch den weiteren Einlass der Reaktant (47) in die zweite Messzelle (46) gelangen kann.

**8.** Messeinrichtung nach einem der Ansprüche 6 bis 7, wobei die Optikeinrichtung eine erste Empfangsoptikvorrichtung (12) und eine zweite Empfangsoptikvorrichtung (33) umfasst.

**9.** Messeinrichtung nach Anspruch 8, wobei die erste Anregung (6) zumindest eine weitere, von der ersten Komponente verschiedene Komponente des Fluids (3) in der ersten Messzelle (2) anregt, so dass die erste Lichtemission (15, 45) eine Lichtemission (15) der ersten Komponente und eine Lichtemission (45) der weiteren Komponente umfasst, und die zweite Empfangsoptikvorrichtung (33) der ersten Messzelle (2) zugeordnet und dazu eingerichtet ist, die Lichtemission (45) der weiteren Komponente zu selektieren und in Richtung der Detektoreinrichtung (43) zu leiten, die Detektoreinrichtung (43) der zweiten Empfangsoptikvorrichtung (33) zugeordnet ist und dazu eingerichtet ist, die Lichtemission (45) der weiteren Komponente zu messen.

10. Messeinrichtung nach einem der Ansprüche 6 bis 9, wobei die Optikeinrichtung (12, 33) zumindest eine Bandpassfiltereinrichtung (21, 40) umfasst, wobei die Bandpassfiltereinrichtung (21, 40) dazu ausgebildet ist, fluidkomponentenspezifische Lichtemissionen zu selektieren.

11. Messeinrichtung nach einem der Ansprüche 6 bis 10, wobei die zumindest eine zweite Stufe (14, 35) ferner zum Selektieren der räumlich gefilterten Raman-Strahlung vorgesehen ist.

**Claims**

1. Method for the measurement of at least two different components of a fluid (3), wherein the fluid (3) is fed to a first and a second measuring cell (46), wherein in the first measuring cell (2) a first component of the fluid (3) is excited by means of a first excitation (6) and a first light emission (15, 45) is triggered as a result, wherein in the second measuring cell (46) at least one second component of the fluid (3) is excited by means of a second excitation, different from the first excitation (6), and a second light emission (48) is triggered as a result, wherein the first light emission (15, 45) and the second light emission (48) are captured by means of a optical system facility (12, 33) and guided in the direction of a detector facility (29, 43), wherein the detector facility (29, 43) measures the first light emission (15, 45) and the second light emission (48), wherein the first excitation is a laser excitation (6), **characterised in that**

   the first light emission (15, 45) is a Raman radiation,
   and the second excitation takes place by dosing a reactant (47) resulting in a chemiluminescence with the second component of the fluid (3), wherein
   the optical system facility (12, 33) has at least one first stage (13, 34) and at least one second stage (14, 35), different from the first stage (13, 34), wherein the at least one first stage (13, 34) is provided for spatial filtering of the Raman radiation and the at least one second stage (14, 35) is provided for mapping the spatially filtered Raman radiation onto the detector facility (29, 43) as well as for capturing and mapping the chemiluminescence onto the detector facility (29, 43), wherein the second measuring cell (46) is arranged between the first measuring cell (2) and the detector facility (29, 43), and
   wherein the detector facility (29, 43) is arranged at an end of the second stage (14, 35) that faces away from the first measuring cell (2), and the second measuring cell (46) is embodied at an end of the second stage (14, 35), within the second stage (14, 35), that faces towards the first stage (13, 34) .

2. Method according to claim 1, wherein the first component is nitrogen dioxide.

3. Method according to claim 1 or 2, wherein the reactant (47) comprises ozone and/or the second component is nitrogen monoxide.

4. Method according to one of claims 1 to 3, wherein for the measurement of the first light emission (15, 45) a first bandpass filter (20, 40) is used and/or for the measurement of the second light emission a second bandpass filter (22) is used.

5. Method according to one of claims 1 to 4, wherein the first light emission (15, 45) comprises a light emission (15) of the first component and a light emission (45) of a further component different from the first component.

6. Measuring facility for the measurement of at least two different components of a fluid (3), comprising

   - a first measuring cell (2) and a second measuring cell (46),
   - an excitation apparatus (7),
   - an optical system facility (12, 33), wherein

   the optical system facility (12, 33) is associated with the first measuring cell (2) and the second measuring cell (46) and has at least one first stage (13, 34) and at least one second stage (14, 35), different from the first stage (13, 34), and - a detector facility (29, 43), wherein

the first measuring cell (2) is designed in such a way that the fluid (3) can be fed to the first measuring cell (2), wherein

the excitation apparatus (7) is associated with the first measuring cell (2) and is configured to generate a first excitation for exciting a first component of the fluid (3) when the fluid (3) is fed to the first measuring cell (2), wherein the first stage (13, 34) is configured to capture a first light emission (15, 45), which can be triggered by the first excitation, to spatially filter it and to guide it in the direction of the detector facility (29, 43), wherein the first excitation is a laser excitation (6) and the first light emission (15, 45) is a Raman radiation, wherein

the detector facility (29, 43) is associated with the optical system facility and is configured to measure the Raman radiation (15, 45), wherein

the second measuring cell (46) is designed in such a way that the fluid (3) can be fed to the second measuring cell (46), wherein,

when the fluid (3) is fed to the second measuring cell (46), a second component of the fluid (3) in the second measuring cell (46) can be excited by a second excitation, different from the first excitation (6), wherein the second excitation takes place by dosing a reactant (47) resulting in a chemiluminescence (48) with the second component of the fluid (3), wherein

the second stage (14, 35) is configured to map the spatially filtered Raman radiation onto the detector facility (29, 43) and to capture the chemiluminescence and to guide it in the direction of the detector facility (29, 43), the detector facility (29, 43) is configured to measure the chemiluminescence (48), and wherein the second measuring cell (46) is arranged between the first measuring cell (2) and the detector facility (29, 43), and the detector facility (29, 43) is arranged at an end of the second stage (14, 35) that faces away from the first measuring cell (2), and the second measuring cell (46) is embodied at an end of the second stage (14, 35), within the second stage (14, 35), that faces towards the first stage (13, 34).

7. Measuring facility according to claim 6, wherein the second measuring cell (46) has an inlet and an outlet for the fluid (3) and a further inlet (52), wherein the reactant (47) can pass into the second measuring cell (46) through the further inlet.

8. Measuring facility according to one of claims 6 to 7, wherein the optical system facility comprises a first receiving optical system apparatus (12) and a second receiving optical system apparatus (33).

9. Measuring facility according to claim 8, wherein the first excitation (6) excites at least one further component of the fluid (3), different from the first component, in the first measuring cell (2), so the first light emission (15, 45) comprises a light emission (15) of the first component and a light emission (45) of the further component, and the second receiving optical system apparatus (33) is associated with the first measuring cell (2) and is configured to select the light emission (45) of the further component and guide it in the direction of the detector facility (43), the detector facility (43) is associated with the second receiving optical system apparatus (33) and is configured to measure the light emission (45) of the further component.

10. Measuring facility according to one of claims 6 to 9, wherein the optical system facility (12, 33) comprises at least one bandpass filtering facility (21, 40), wherein the bandpass filtering facility (21, 40) is designed to select fluid component-specific light emissions.

11. Measuring facility according to one of claims 6 to 10, wherein the at least one second stage (14, 35) is further provided for selecting the spatially filtered Raman radiation.

## Revendications

1. Procédé de mesure d'au moins deux constituants différents d'un fluide (3), dans lequel on envoie le fluide (3) à une première et à une deuxième cellule (46) de mesure, dans lequel dans la première cellule (2) de mesure on excite un premier constituant du fluide (3) au moyen d'une première excitation (6) et on déclenche ainsi une première émission (15, 45) de lumière, dans lequel dans la deuxième cellule (46) de mesure on excite au moins un deuxième constituant du fluide (3) au moyen d'une deuxième excitation différente de la première excitation (6) et on déclenche ainsi une deuxième émission (48) de lumière, dans lequel on capte la première émission (15, 45) de lumière et la deuxième émission (48) de lumière au moyen d'un dispositif (12, 33) optique et on les guide en direction d'un dispositif (29, 43) de détection, dans lequel le dispositif (29, 43) de détection mesure la première émission (15, 45) de lumière et la deuxième émission (48) de lumière, dans lequel la première excitation est une excitation (6) laser, **caractérisé en ce que**

la première émission (15, 45) de lumière est un rayonnement Raman et la deuxième excitation s'effectue par addition dosée d'un réactif (47) provoquant une chemioluminescence avec le deuxième constituant du fluide (3), dans lequel

le dispositif (12, 33) optique a au moins un premier étage (13, 34) et au moins un deuxième étage (14, 35) différent du premier étage (13, 34), dans lequel le au moins un premier étage (13, 34) est prévu pour un filtrage spatial du rayonnement Raman et le au moins un deuxième étage (14, 35) est prévu pour la représentation du rayonnement Raman filtré spatialement sur le dispositif (29, 43) de détection ainsi que pour la capture et la représentation de la chemioluminescence sur le dispositif (29, 43) de détection, la deuxième cellule (46) de mesure est disposée entre la première cellule (2) de mesure et le dispositif (29, 43) de détection, et

dans lequel le dispositif (29, 43) de détection est disposé à une extrémité du deuxième étage (14, 35) non tournée vers la première cellule (2) de mesure et la deuxième cellule (46) de mesure est constituée dans le deuxième étage (14, 35) à une extrémité du deuxième étage (14, 35) tournée vers le premier étage (13, 34).

**2.** Procédé suivant la revendication 1, dans lequel le premier constituant est du dioxyde d'azote.

**3.** Procédé suivant la revendication 1 ou 2, dans lequel le réactif (47) comprend de l'ozone et/ou le deuxième constituant est du monoxyde d'azote.

**4.** Procédé suivant l'une des revendications 1 à 3, dans lequel on utilise, pour la mesure de la première émission (15, 45) de lumière, un premier filtre (20, 40) passe-bande et/ou, pour la mesure de la deuxième émission de lumière, on utilise un deuxième filtre (22) passe-bande.

**5.** Procédé suivant l'une des revendications 1 à 4, dans lequel la première émission (15, 45) de lumière comprend une émission (15) de lumière du premier constituant et une émission (45) de lumière d'un autre constituant différent du premier constituant.

**6.** Dispositif de mesure pour la mesure d'au moins deux constituants différents d'un fluide (3) comprenant

- une première cellule (2) de mesure et une deuxième cellule (46) de mesure,
- un système (7) d'excitation,
- un dispositif (12, 33) optique, dans lequel
le dispositif (12, 33) optique est affecté à la première cellule (2) de mesure et à la deuxième cellule (46) de mesure et a au moins un premier étage (13, 34) et au moins un deuxième étage (14, 35) différent du premier étage (13, 34), et
- un dispositif (29, 43) de détection, dans lequel

la première cellule (2) de mesure est constituée, de manière à pouvoir envoyer le fluide (3) à la première cellule (2) de mesure, dans lequel
le système (7) d'excitation est affecté à la première cellule (2) de mesure et est agencé pour produire une première excitation pour exciter un premier constituant du fluide (3), si le fluide (3) est envoyé à la première cellule (2) de mesure, dans lequel
le premier étage (13, 34) est agencé pour capter une première émission (15, 45) de lumière pouvant être déclenchée par la première excitation, la filtrer spatialement et l'envoyer en direction du dispositif (29, 43) de détection, dans lequel la première excitation est une excitation (6) laser et la première émission (15, 45) de lumière est un rayonnement Raman, dans lequel
le dispositif (29, 43) de détection est affecté au dispositif optique et est agencé pour mesurer le rayonnement (15, 45) Raman, dans lequel
la deuxième cellule (46) de mesure est constituée, de manière à pouvoir envoyer le fluide (3) à la deuxième cellule (46) de mesure, dans lequel
si le fluide (3) est envoyé à la deuxième cellule (46) de mesure, un deuxième constituant du fluide (3) peut, dans la deuxième cellule (46) de mesure, être excité par une deuxième excitation différente de la première excitation (6), dans lequel la deuxième excitation s'effectue par addition dosée d'un réactif (47) provoquant une chemioluminescence (48) avec le deuxième constituant du fluide (3), dans lequel
le deuxième étage (14, 35) est agencé pour représenter le rayonnement Raman filtré spatialement sur le dispositif (29, 43) de détection et capter la chemioluminescence (48) et l'envoyer dans la direction du dispositif (29, 43) de détection,
le dispositif (29, 43) de détection est agencé pour mesurer la chemioluminescence (48), et dans lequel la deuxième cellule (46) de mesure est disposée entre la première cellule (2) de mesure et le dispositif (29, 43) de détection et le dispositif (29, 43) de détection est disposé à une extrémité du deuxième étage (14, 35) non tournée vers la première cellule (2) de mesure,

et la deuxième cellule (46) de mesure est constituée dans le deuxième étage (14, 35) à une extrémité du deuxième étage (14, 35) tournée vers le premier étage (13, 34).

7. Dispositif de mesure suivant la revendication 6, dans lequel la deuxième cellule (46) de mesure a une entrée et une sortie pour le fluide (3) et une autre entrée (52), dans lequel le réactif (47) peut arriver à l'autre cellule (46) de mesure par l'autre entrée.

8. Dispositif de mesure suivant l'une des revendications 6 à 7, dans lequel le dispositif optique comprend un premier système (12) optique de réception et un deuxième système (33) optique de réception.

9. Dispositif de mesure suivant la revendication 8,

dans lequel la première excitation (6) excite dans la première cellule (2) de mesure au moins un autre constituant du fluide (3) différent du premier constituant, de manière à ce que la première émission (15, 45) de lumière comprenne une émission (15) de lumière du premier constituant et une émission (45) de lumière de l'autre constituant, et

le deuxième système (33) optique de réception est affecté à la première cellule (2) de mesure et est agencé pour sélectionner l'émission (45) de lumière de l'autre constituant et l'envoyer en direction du dispositif (43) de détection, le dispositif (43) de détection est affecté au deuxième système (33) optique de réception et est agencé pour mesurer l'émission (45) de lumière de l'autre constituant.

10. Dispositif de mesure suivant l'une des revendications 6 à 9, dans lequel le dispositif (12, 33) optique comprend au moins un dispositif (21, 40) de filtre passe-bande, dans lequel le dispositif (21, 40) de filtre passe-bande est constitué pour sélectionner des émissions de lumière spécifiques au un constituant du fluide.

11. Dispositif de mesure suivant l'une des revendications 6 à 10, dans lequel le au moins un deuxième étage (14, 35) est prévu en outre pour sélectionner le rayonnement Raman filtré spatialement.

FIG 1

EP 4 089 401 B1

FIG 2

FIG 3

EP 4 089 401 B1

# FIG 4

FIG 5

EP 4 089 401 B1

# FIG 6

EP 4 089 401 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 9908115 A1
- US 4573796 A